# EUROPEAN PATENT SPECIFICATION

(11) **EP 2 760 112 B1**
(45) Date of publication and mention of the grant of the patent: **19.08.2015**
(21) Application number: 13000373.4
(22) Date of filing: 25.01.2013
(51) Int. Cl.: H02K 1/27, H02K 1/17, H02K 15/03

(54) **Permanent magnet, electric machine, and method for manufacturing such a permanent magnet**
Dauermagnet, elektrische Maschine und Verfahren zur Herstellung eines derartigen Dauermagnets
Aimant permanent, machine électrique et procédé de fabrication d'un tel aimant permanent

(43) Date of publication of application: 30.07.2014
(73) Proprietor: Bomatec Holding AG, 8181 Höri (CH)
(72) Inventor: Weber, Kurt, 8164 Bachs (CH)
(74) Representative: Fischer, Britta Ruth

(56) References cited:
- WO-A1-2006/040584
- JP-A- 2002 345 189
- JP-A- 2004 260 951
- JP-A- 2011 259 630
- US-A1- 2008 036 309
- US-B1- 6 359 359

## Description

The invention relates to a permanent magnet for an electric machine, an electric machine and a method for manufacturing such a permanent magnet according to the preambles of the independent claims. The electric machine may, for example, be a permanent magnet machine or a synchronous machine. The permanent magnet may be arranged on the rotor or on the stator of the electric machine. The electric machine may also be given by a linear machine with an 'unrolled' rotor in form of a so-called forcer on which the permanent magnet may be mounted. The electric machine may be used as motor, e.g. as servomotor, and/or as generator. The electric machine may in particular be used as hybrid motor, especially as starter-generator for example in vehicles.

Permanent magnet machines, in particular permanent magnet machines with single-tooth windings, often suffer from eddy current losses resulting from eddy currents induced within the permanent magnets. Eddy currents lead to the generation of heat which can result in thermal overloading and failure of the electrical machine. On the one hand the eddy currents are caused by a changing/pulsating magnet field in the air gap of the electric machine, the pulsation of the air gap field depending on the grooving and the current feed of the stator of the electric machine. On the other hand the eddy currents are caused by a changing magnetic flow caused by feeding currents to the single-tooth windings of an electric machine.

To reduce eddy current losses it is known to segment the permanent magnets into a plurality of permanent magnet segments that are separate from each other (see for example EP 1 976 096 A2), with the plurality of permanent magnet segments being isolated from each other and bonded together. The number of separate permanent magnet segments depends on the particular geometry of the electrical machine and can, for example, be computed by means of the finite element programme FEMAG (see http://www.femag.de/).

This known procedure works fine for block magnets with a thickness/depth of more than 9 millimetres. However, while the permanent magnet segments, into which the block magnet is segmented, can be bonded/adhered together, further processing of the permanent magnet segments true to size is virtually impossible. With decreasing dimensions of electric machines this poses a problem. WO 2006/040584 A1 shows a magnet of a magnet assembly for a linear electromechanical machine that is a ring shaped magnet with two full depth grooves and hence a magnet according to the preamble of claim 1.

It is an object of the invention to provide a permanent magnet for an electric machine, an electric machine and a method for manufacturing such a permanent magnet by which eddy current losses in the permanent magnet can be avoided or at least reduced and which are suitable for electric machines of any dimensions, in particular also for electric machines of small dimensions.

In order to implement these and still further objects of the invention, which will become more readily apparent as the description proceeds, a permanent magnet for an electric machine is provided, the permanent magnet having one or more grooves. The one or more grooves divide the permanent magnet in at least two sections that are interconnected by one or more bridges. I.e. the one or more grooves do not cut through the permanent magnet in its entirety.

Thus, dividing of the permanent magnet is such that it remains in one piece, the one piece in particular being given by one solid piece of material with grooves for eddy current losses to be minimized. Hence, the material of the one or more bridges preferably corresponds to the material of the rest of the permanent magnet.

According to the invention, the depth of the one or more grooves corresponds to the depth of the permanent magnet. However, in an axial/lateral direction the one or more grooves do not cut entirely through the permanent magnet, leaving one or more bridges to connect the sections of the permanent magnet. Such a groove has a helical course or has a meandering course.

The one or more grooves are preferably filled with isolation material for electrical isolation. Filling of the one or more grooves with isolation material also increases durability of the permanent magnet.

According to a further embodiment of the magnet not being within the present invention, the one or more grooves are formed in a first surface of the permanent magnet, with the depth of the one or more grooves being less than the depth of the permanent magnet, thereby leaving the permanent magnet in one piece. The first surface of the permanent magnet is preferably the surface that faces away from the peripheral surface of a rotor hub, an inner surface of a stator, or a surface of a forcer onto which the permanent magnet shall be arranged. Hence, in an arranged state the one or more grooves of this embodiment extend in the radial direction.

To further reduce eddy current losses one or more indentations may be formed in a second surface opposite to the first surface, the indentations preferably also extending in the radial direction. The depth of the one or more indentations is preferably less than the depth of the one or more grooves. Moreover, the depth of the one or more indentations is preferentially such that the sum of the depth of the one or more grooves and the depth of the one or more indentations is less than the depth of the permanent magnet, especially if the one or more indentations are formed opposite the one or more grooves. The indentations are in any case formed such that the permanent magnet remains in one piece. The one or more indentations may be used as pockets for receiving an adhesive/glue for affixing the second surface and thus the permanent magnet to the peripheral surface of a rotor hub, the inner surface of a stator, or a surface of a forcer.

Direction and shape of the one or more grooves may be arbitrary and preferably depends on the specific application. The same applies to the number of grooves per permanent magnet. Preferentially, number, shape and direction of the grooves are such that eddy current losses are minimized for the specific application. To achieve this, the direction of at least some, preferably all, of the one or more grooves is preferentially perpendicular to the direction of the magnetic field that might cause the eddy currents. Most preferably, at least some, preferably all, of the one or more grooves extend in the axial direction of the air gap of the electric machine when the permanent magnet is arranged on a rotor hub, a forcer or a stator.

The electric machine according to the invention comprises at least two permanent magnets of the invention that are arranged circumferentially around the peripheral surface of a rotor hub, an inner surface of a stator, or a surface of a forcer in case of a linear machine.

According to the method of the invention a permanent magnet of the invention is manufactured by forming one or more grooves in a permanent magnet blank such that the one or more grooves divide the permanent magnet blank into at least two sections that are interconnected by one or more bridges. With the method of the invention a permanent magnet with one or more grooves is formed that is still in one piece, with the material of the bridges preferably corresponding to the material of the rest of the permanent magnet. The groove has or the grooves have a helical course or has or have a meandering course.

Before the permanent magnet blank is provided with the one or more grooves, the permanent magnet blank is brought into the requested dimensions, e.g. by cutting/tailoring it to shape. After the one or more grooves have been formed, they may be filled with isolation material.

The one or more grooves are such that their depth corresponds to the depth of the permanent magnet and the permanent magnet blank, respectively. The course of the one or more grooves runs axially trough the permanent magnet, just leaving one or more bridges extending in the axial direction for interconnection of the sections the permanent magnet has been divided into by means of the one or more grooves.

Such grooves are preferably formed by means or wire erosion with the wire being moved through the permanent magnet blank in axial direction(s).

The one or more grooves may also be formed in an embodiment not within the invention such that they do not extend through the entire depth of the permanent magnet. For this the one or more grooves are formed in a first surface of a permanent magnet blank, with the depth of the one or more grooves being less than the depth of the permanent magnet blank and the permanent magnet, respectively. I.e. the one or more grooves extend radially, each leaving a bridge in the radial direction for interconnection of the sections the permanent magnet has been divided into by means of the grooves.

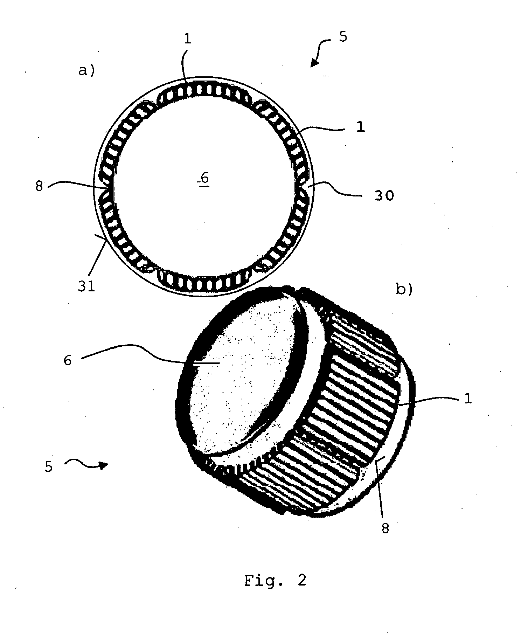

Expressions such as "radial", "axial", "radial direction", "axial direction" especially refer to the permanent magnet of the invention in its mounted state as depicted in Figure 2.

The invention is especially well suited for permanent magnets made of an alloy of neodymium, iron and boron (also called neodymium magnets or NdFeB magnets) and for permanent magnets made of an alloy of samarium and cobalt (also called samarium-cobalt magnets or SmCo magnets). The method of the invention may be applied to permanent magnet blanks in the shape of block magnets or in all other possible shapes. As isolation material epoxy resin may be used.

With the invention eddy current losses in electric machines can be reduced while providing permanent magnets that are suitable even for small-sized electric machines.

Further advantageous features and applications of the invention can be found in the dependent claims, as well as in the following description of the drawings illustrating the invention. Dimensions given in the drawings merely serve as examples. In the drawings like reference signs designate the same or similar parts/components throughout the several figures of which:
Fig 1 shows a cross section of a permanent magnet not being within the invention,
Figs. 2 shows a rotor with permanent magnets not being within the invention in cross section (Fig. 2a)) and in perspective view (Fig. 2b)),
Fig. 3a), Fig. 3b) and Fig. 3c) show steps of the method of the invention,
Fig. 4 shows a further embodiment of a permanent magnet not being within the invention in perspective view,
Fig. 5 shows a detail of Figure 4, and
Figs. 6 and 7 show still further embodiments of a permanent magnet not being within the invention in perspective view; and
Figs. 8, 9, and 10 show embodiments of a permanent magnet according to the invention.

Where a coordinate system is given in a lower left corner of a Figure, the rotation of the coordinate system indicates the angle of view with respect to the particular Figure.

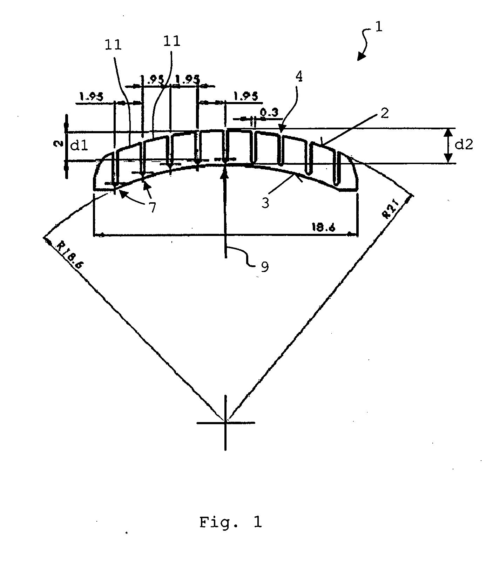

Figure 1 shows a preferred embodiment 1 of a permanent magnet not being within the invention. The permanent magnet 1 has a first surface 2 and a second surface 3, the second surface 3 being opposite the first surface 2. In the first surface 2 several grooves 4 are provided. The depth d1 of the grooves 4 is less than the depth of the permanent magnet 1 at the site of the particular groove 4 such that the permanent magnet 1 is in one piece. Provision of the grooves 4 advantageously reduces eddy current losses. The grooves 4 extend in radial direction and divide the permanent magnet 1 into various sections 11 that are connected at one end by bridges 7. The bridges 7 form an integral part of the permanent magnet 1.

Preferably, the first surface 2 is the surface facing away from a rotor hub 6 toward an air gap 30, the air gap 30 being between the rotor 5 and a stator 31, and the second surface 3 is the surface facing toward the rotor hub 6 (and its bonding surface, respectively) of a rotor 5 of an electric machine when the permanent magnet 1 is arranged on the rotor hub 6 as depicted in Figure 2, as eddy current losses are typically largest in the surface of a permanent magnet that faces away from the rotor hub 6 toward the air gap 30. However, it is of course also possible to provide a permanent magnet 1 whose first surface that is provided with one or more grooves 4 faces toward the rotor hub 6 (and its bonding surface, respectively). Of course, with a different type of electric machine the permanent magnet 1 may be arranged on a stator or on a forcer instead.

The grooves 4 are preferably designed as longitudinally extending grooves arranged in parallel to each other. As an example Figure 1 shows nine grooves 4. The width of a groove 4 lies preferably in a range of 0.05 millimetres to several 0.1 millimetres, in particular to 0.9 millimetres. Preferably, the width of the groove(s) 4 is as small as possible. Figure 1 depicts an exemplary groove width of 0.3 millimetres. The distance between two grooves 4 may for example be 1.95 millimetres. With the depth d2 of the permanent magnet 1 lying for example in the range of 2.1 to 2.9 millimetres (± 0.0.5 millimetres), the depth d1 of a groove 4 may be approximately 2 millimetres. This leads to an exemplary depth of the bridges 7 of the permanent magnet 1 of 0.1 millimetres to several 0.1 millimetres. I.e. the difference between the depth d2 of the permanent magnet 1 and the depth d1 of a groove 4 lies preferable in the range of 0.1 millimetres to several 0.1 millimetres, in particular to 0.9 millimetres.

Figures 2a) and b) show a rotor 5 for a permanent magnet machine (not shown), with the rotor 5 having a rotor hub 6. On the peripheral surface 8 of the rotor hub 6 several permanent magnets 1 (as depicted in Figure 1) are arranged circumferentially next to each other, preferably such that their grooves 4 extend in the axial direction of the rotor 5 and the rotor hub 6, respectively. Arrow 9 in Figure 1 illustrates a typical direction of magnetization when the permanent magnet 1 is arranged on a rotor hub 6 as shown in Figures 2a) and 2b). The grooves 4 extend preferably perpendicular to the direction of the magnetic field as indicated by the arrow 9, i.e. the grooves 4 preferably intersect the magnetic field. For several permanent magnets 1 being arranged on the rotor hub 6, their polarities preferably alternate for consecutive permanent magnets 1. Of course, it is also possible that the polarity within a permanent magnet 1 alternates.

In Figures 2a) and 2b) the grooves 4 do also not cut entirely through the permanent magnet 1. As mentioned above the depth d1 of the grooves 4 is less than the depth d2 of the permanent magnet 6, leaving bridges 7 connecting the various sections 11 of the permanent magnet 1, into which the permanent magnet 1 has been divided into by means of the grooves 4. The permanent magnets 1 are preferable arranged such on the rotor hub 6 that their first surface 2, into which the grooves 4 have been introduced, faces away from the rotor hub 6 toward the air gap 30 with the opposite second surface 3 that comprises the bridges 7 facing toward the rotor hub 6 (and its bonding surface, respectively). The permanent magnets 1 are in particular affixed to the rotor hub 6 by affixing their second surfaces 3 to the peripheral surface 8 of the rotor hub 6.

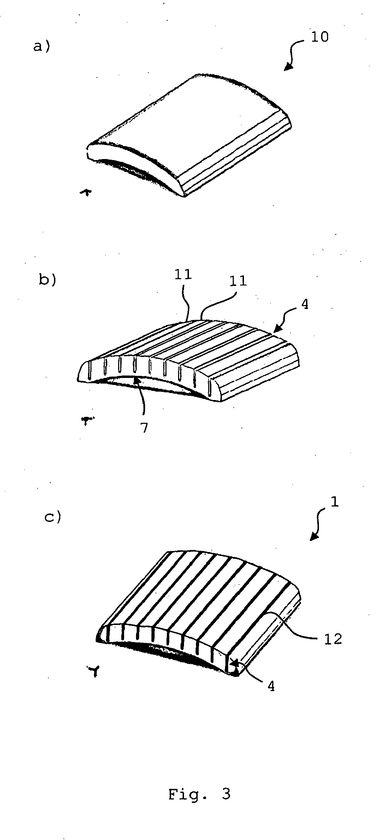

Figure 3 illustrates the method as it can be used for the invention that is employed for manufacturing a permanent magnet 1 as shown in Figure 1. A permanent magnet blank 10 (yet without grooves 4) is provided that has been cut into the dimensions of the permanent magnet 1 to be manufactured (see Figure 3a)). Then grooves 4 are formed, e.g. by cutting or drilling, in a first surface 2 of the permanent magnet blank 10, thereby forming the permanent magnet 1 according to the invention (see Figure 3b)). As already mentioned for the permanent magnet 1 depicted in Figure 1, the grooves 4 are formed such that their depth d1 is less than the depth d2 of the permanent magnet blank 10 and of the permanent magnet 1, respectively. The depth of the permanent magnet blank 10 corresponds to the depth d2 of the final permanent magnet 1. The grooves 4 may for example extend in parallel to each other, thereby dividing the permanent magnet blank 10 and thus the permanent magnet 1 in several sections 11 that are connected by the bridges 7. I.e. the sections 11 the permanent magnet 1 is divided into are not entire separated from each other.

As shown in Figure 3c) the grooves 4 are preferably filled with isolation material 12 for stabilization of the permanent magnet 1. As isolation material for example temperature-resistant epoxy resin may be used.

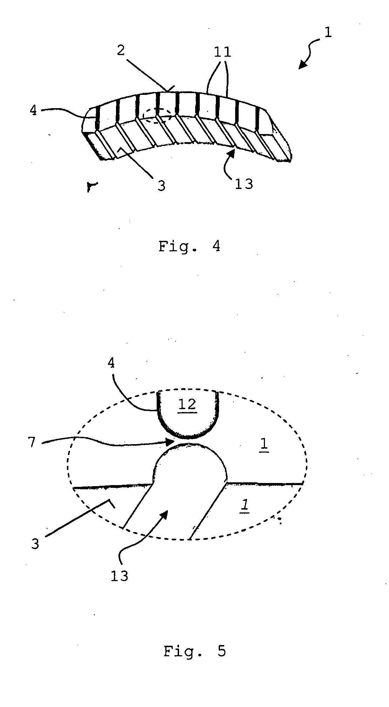

To still further reduce eddy current loss indentations 13 are preferably formed in the second surface 3 of the permanent magnet 1, the indentations 13 preferentially being opposite the grooves 4 (see Figure 4). As can be seen from Figure 5 that depicts a detail of Figure 4, the depth of the bridges 7 is reduced by the indentations. However, the depth of the indentations 13 is chosen such that the sections 11 of the permanent magnet 1 are still interconnected by way of the bridges 7, i.e. the bridges 7 are still there. The depth of the indentations 13 is preferably less than the depth d1 of the grooves 4. The indentations 13 may be filled with adherence/glue in order to affix the permanent magnet 1 by way of its second surface 3 to the rotor hub 6 of the rotor 5.

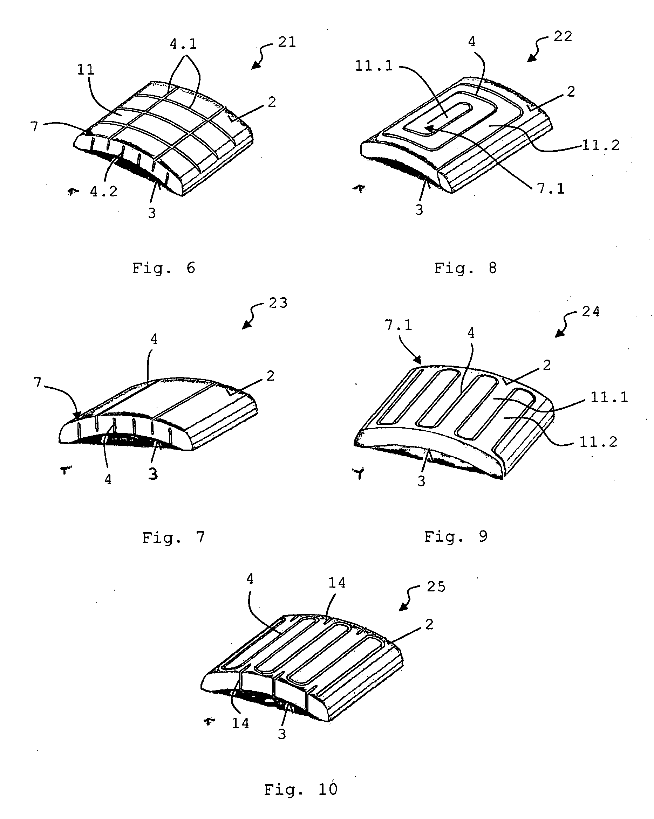

Figures 6 to 10 show further embodiments 21-25 of a permanent magnet, figures 8 to 10 showing magnets according to the invention. Also in these embodiments 21-25 the one or more grooves 4 are preferably filled with isolation material 12 for electrical isolation, and one or more indentations 13 may be provided especially on the surface of the permanent magnet that shall be affixed to a rotor hub 6. For description of the isolation material 12 and of the one or more indentations 13 it is referred to the above. In the case of more than one groove 4, the grooves 4 may be distributed symmetrically or asymmetrically about the first surface 2 and/or the second surface 3 of the permanent magnet of the invention.

Figure 6 depicts a permanent magnet 21 with grooves 4.1 formed such in the first surface 2 that they form a grid. Additional longitudinally extending grooves 4.2 may be formed in the opposite second surface 3. However, the grooves 4.2 in the second surface 3 are laterally displaced with respect to the grooves 4.1 for the permanent magnet 21 to still form one piece. The depth of both the grooves 4.1 and the grooves 4.1 is less than the depth of the permanent magnet 21.

Figure 7 depicts a permanent magnet 23 with longitudinally extending and parallel grooves 4 distributed over the first surface 2 and also over the second surface 3, the depth of the grooves 4 being less than the depth of the permanent magnet 23. Again, the grooves 4 are distributed such that they are laterally displaced from each other for the permanent magnet 23 to be in one piece.

The permanent magnet 22 of Figure 8 has a groove 4 with a depth that corresponds to the depth of the permanent magnet 22. I.e. the groove 4 cuts right through the permanent magnet 22 in radial direction. However, the course of the groove 4 is such that it does not cut right through the permanent magnet 22 in any axial direction, i.e. in axial direction a bridge 7.1 remains connecting the sections 11.1, 11.2 of the permanent magnet 22 such that the permanent magnet 22 is one piece. As depicted the groove 4 has a helical course in the axial direction.

Figure 9 depicts a permanent magnet 24 with a groove 4 having a meandering course in the axial direction. As with the embodiment 22 depicted in Figure 8, the depth of the groove 4 corresponds to the depth of the permanent magnet 24 but the groove 4 does not entirely cut through the permanent magnet 24 in axial direction, leaving the bridge 7.1 interconnecting the sections 11.1 and 11.2.

The permanent magnet 25 of figure 10 basically corresponds to the embodiment 24 depicted in Figure 9. In addition slots 14 are provided that extend into but do not intersect with the loops of the meandering groove 4, the slots 14 preferably having the depth d2 of the permanent magnet 25.

Of course, further embodiments than the depicted can be realized.

## Claims

1. Permanent magnet for an electric machine, wherein one or more grooves (4; 4.1) are provided in the permanent magnet (1; 21; 22; 23; 24; 25), the one or more grooves (4; 4.1) dividing the permanent magnet (1; 21; 22; 23; 24; 25) in at least two sections (11; 11.1, 11.2) that are interconnected by one or more bridges (7; 7.1) and wherein the depth (d1) of the one or more grooves (4; 4.1) is equal to the depth (d2) of the permanent magnet (22; 24; 25), **characterized in that** a groove (4) is provided that has a helical course or a meandering course.

2. Permanent magnet according to claim 1, wherein the one or more grooves (4; 4.1) are filled with isolation material (12).

3. Permanent magnet according to one of the preceding claims, wherein the width of each of the one or more grooves (4; 4.1) lies in the range of 0.05 millimetres to 0.9 millimetres.

4. Electric machine with a rotor (5) and a stator, **characterized in that** at least two permanent magnets (22; 24; 25) according to one of the preceding claims are arranged circumferentially around the peripheral surface (8) of a rotor hub (6) of the rotor (5) or on an inner surface of the stator or on a surface of a forcer.

5. A method for manufacturing a permanent magnet (22; 24; 25) according to one of the claims 1 to 3, wherein one or more grooves (4; 4.1) are formed in a permanent magnet blank (10) such that the one or more grooves (4; 4.1) divide the permanent magnet blank (10) into at least two sections (11; 11.1, 11.2) that are interconnected by one or more bridges (7; 7.1) and wherein the depth (d1) of the one or more grooves (4; 4.1) is equal to the depth (d2) of the permanent magnet (22; 24; 25) **characterized in that** a groove (4) is provided that has a helical course or a meandering course.

6. The method according to claim 5, wherein the one or more grooves (4; 4.1) are filled with isolation material.

## Patentansprüche

1. Permanentmagnet für eine elektrische Maschine, wobei eine oder mehrere Ausnehmungen (4; 4.1) im Permanentmagnet (1; 21; 22; 23; 24; 25) vorgesehen sind, wobei die eine Ausnehmung oder die mehreren Ausnehmungen den Permanentmagneten (1; 21; 22; 23; 24; 25) in mindestens zwei Abschnitten (11; 11.1, 11.2), die mittels einer oder mehrerer Brücken (7; 7.1) miteinander verbunden sind, teilen, und wobei die Tiefe (d1) der einen Ausnehmung oder der mehreren Ausnehmungen (4; 4.1) gleich der Tiefe (d2) des Permanentmagneten (22; 24; 25) ist, **dadurch gekennzeichnet, dass** eine Ausnehmung (4) bereitgestellt ist, welche einen spiralförmigen oder einen mäanderförmigen Verlauf hat.

2. Permanentmagnet nach Anspruch 1, wobei die eine Ausnehmung oder die mehreren Ausnehmungen (4; 4.1) mit Isolationsmaterial (12) gefüllt ist bzw. sind.

3. Permanentmagnet nach einem der vorangehenden Ansprüche, wobei die Breite der einen Ausnehmung oder der mehreren Ausnehmungen (4; 4.1) im Bereich zwischen 0.05 Millimeter und 0.9 Millimeter liegt.

4. Elektrische Maschine mit einem Rotor (5) und einem Stator, **dadurch gekennzeichnet, dass** mindestens zwei Permanentmagnete (22; 24; 25) nach einem der vorangehenden Ansprüche umlaufend um die Randfläche (8) einer Rotornabe (6) des Rotors (5) oder auf einer Innenfläche des Stators oder auf einer Fläche eines Läufers angeordnet sind.

5. Ein Verfahren zur Herstellung eines Permanentmagneten (22; 24; 25) nach einem der Ansprüche 1 bis 3, wobei eine Ausnehmung oder mehrere Ausnehmungen (4; 4.1) in einem Permanentmagnetrohling (10) derart gebildet wird, dass die eine Ausnehmung oder die mehrere Ausnehmungen (4; 4.1) den Permanentmagnetrohling (10) in mindestens zwei Teilen (11; 11.1, 11.2) teilen, welche miteinander mittels einer oder mehrerer Brücken (7; 7.1) verbunden sind und wobei die Tiefe (d1) der einen Ausnehmung oder der mehreren Ausnehmungen (4; 4.1) gleich der Tiefe (d2) des Permanentmagneten (22; 24; 25) ist, **dadurch gekennzeichnet, dass** eine Ausnehmung (4) vorgesehen ist, die einen spiralförmigen Verlauf oder einen mäanderförmigen Verlauf hat.

6. Das Verfahren nach Anspruch 5, wobei die eine Ausnehmung oder die mehreren Ausnehmungen (4; 4.1) mit Isolationsmaterial gefüllt ist bzw. sind.

## Revendications

1. Aimant permanent pour une machine électrique, une ou plusieurs cavités (4; 4.1) étant prévues dans l'aimant permanent (1; 21; 22; 23; 24; 25), l'une ou plusieurs cavités (4; 4.1) séparant l'aimant permanent (1; 21; 22; 23; 24; 25) en au moins deux sections (11; 11.1, 11.2) interconnectées par un ou plusieurs ponts (7; 7.1) et la profondeur (d1) de l'une ou plusieurs cavités (4; 4.1) étant égale à la profondeur (d2) de l'aimant permanent (22; 24; 25), **caractérisé en ce qu'**une cavité (4) est prévue, ayant une forme hélicoïdale ou sinueuse.

2. Aimant permanent selon la revendication 1, l'une ou plusieurs cavités (4; 4.1) étant remplies avec du matériau isolant (12).

3. Aimant permanent selon l'une des revendications précédentes, la largeur de chacune des cavités (4; 4.1) étant comprise entre 0.05 millimètres et 0.9 millimètres.

4. Machine électrique avec un rotor (5) et un stator, **caractérisée en ce qu'**au moins deux aimants permanents (22; 24; 25) selon l'une des revendications précédentes sont arrangés de manière circonférentielle autour de la surface périphérique (8) d'un moyeu (6) du rotor (5) ou sur une surface intérieure du stator ou sur une surface d'un piston.

5. Un procédé pour fabriquer un aimant permanent (22; 24; 25) selon l'une des revendications 1 à 3, une ou plusieurs cavités (4; 4.1) étant formées dans un aimant permanent brut (10) de sorte qu'une ou plusieurs cavités (4; 4.1) divisent l'aimant permanent brut (10) en au moins deux sections (11; 11.1, 11.2) interconnectées par un ou plusieurs ponts (7; 7.1) et la profondeur (d1) de l'une ou plusieurs cavités (4; 4.1) étant égale à la profondeur (d2) de l'aimant permanent (22; 24; 25) **caractérisé en ce qu'**une cavité (4) est prévue, ayant une forme hélicoïdale ou sinueuse.

6. Le procédé selon la revendication 5, l'une ou les plusieurs cavités (4; 4.1) étant remplies avec du matériau isolant (12).
